# EUROPEAN PATENT APPLICATION

(11) **EP 4 403 765 A1**
(43) Date of publication of application: **24.07.2024**
(21) Application number: 23382044.8
(22) Date of filing: 20.01.2023
(51) Int. Cl.: F03D 1/06

(54) **FLOW MODIFYING ELEMENT FOR WIND TURBINE BLADE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

A flow modifying element for a wind turbine blade is provided. The wind turbine blade (10) comprises a blade body (20) having a leading edge (16), a suction surface (18), and a pressure surface (19). The flow modifying element (30) is configured to provide a trailing edge (17) for at least a longitudinal section (15) of the wind turbine blade (10). The flow modifying element (30) and the blade body (20) form an aerodynamic profile. The flow modifying element (30) comprises a suction side (32), a pressure side (33), a trailing end (37) that provides the trailing edge (17) of the aerodynamic profile, and a pressure surface extending section (39) on the pressure side (33) which is configured to extend the pressure surface (19) of the blade body (20) towards the trailing end (37). A pressure side profile section (40) of the flow modifying element has a shape of a concave curve and forms a recessed portion (44).

## Description

### FIELD OF THE INVENTION

The present invention relates to a flow modifying element for a wind turbine blade, in particular for providing a trailing edge for such blade, and further to a wind turbine blade comprising such flow modifying element.

### BACKGROUND

The use of wind energy is proliferating. To extract more energy from the wind, larger wind turbines requiring larger blades are being manufactured and installed. A wind turbine blade is mounted to a hub of a wind turbine rotor at its root end and extends to a tip end. Whereas the properties of the root region of the blade are usually governed by structural considerations, the mid span and outboard regions of the blade are generally designed for improved aerodynamic performance. The aerodynamic profiles (also termed "airfoils") in the root region of the blade have therefore often a high relative thickness.

To aid rotor startup and energy production at medium wind speeds, the profiles in the root region of the blade may be provided with a large chord length and large twist. This however makes manufacturing of the blade more cost-intensive and difficult, and further, due to the size and the weight of the blade, poses problems for logistics, such as transportation of the blade.

To address such problems, the document US 7,204,674 B2 describes a rotor blade that has at its trailing edge a part that allows reduction of the chord length of the blade, for example by providing an inflatable part that is deflated during transport and can be inflated during normal operation.

Other solutions disclosed in the document include an element that can be extended to prolong a surface of the blade or deformable material that can be wound up using folding arms that extend. A problem further arises due the load applied to such large blades during high wind conditions. In the above document, the inflatable element may be deflated again to reduce the area of the blade, or the surface element may be retracted. A similar solution is disclosed in document EP 2 322 793 A1, in which a trailing edge section of the blade comprises a collapsible chamber that collapses when a predetermined rotor speed is reached. Thereby, the aerodynamic performance of the blade is reduced, whereby over-speed control is achieved. The reduced aerodynamic performance reduces the rotor speed and thus prevents damage to the blade.

Rotor blade manufacturing further often results in a blunt trailing edge of the aerodynamic profile, which may for example be due to the gluing together of the two shell parts having a certain thickness, which is increased by the thickness of the glue layer, as described in the document WO 2011/157849 A2. The document suggests the providing of a premanufactured trailing edge part having a well-defined shape and edge, which essentially extends the profile shape given by the blade. Another possibility of dealing with a blunt trailing edge in the inner region of the blade is described in document US 2021/0079886 A1, wherein a splitter plate is mounted to the blunt trailing edge below a transition from the suction side to the trailing edge and which has a surface part that lies in the shear layer generated by the suction side of the blade.

The above solutions still suffer from deficiencies regarding their aerodynamic performance. In particular, it is desirable to allow the tuning of the aerodynamic performance in accordance with the design goals of the blade designer. It may in particular be beneficial to provide a lift increase and/or drag decrease.

### SUMMARY

There is accordingly a need to mitigate at least some of the drawbacks mentioned above and to improve the aerodynamic properties of a wind turbine blade, in particular in the root region thereof.

This need is met by the features of the independent claims. The dependent claims describe embodiments of the invention.

According to an aspect of the invention, a flow modifying element for a wind turbine blade is provided, wherein the wind turbine blade comprises a blade body having a leading edge, a suction surface, and a pressure surface. The flow modifying element is configured to provide a trailing edge for at least a longitudinal section of the wind turbine blade. The flow modifying element and the blade body form an aerodynamic profile. The flow modifying element comprises a suction side, a pressure side, a trailing end that provides the trailing edge of the aerodynamic profile, and a pressure surface extending section on the pressure side. The pressure surface extending section is configured to extend the pressure surface of the blade body towards the trailing end. The pressure surface extending section is shaped to provide in the aerodynamic profile a pressure side profile section that has a shape of a concave curve and that forms a recessed portion that is recessed from the pressure side towards the suction side of the flow modifying element.

When mounted to or integrated into the blade body, the flow modifying element may reduce drag and increase lift for the wind turbine blade. The concavely curved shape may in particular lead to a respective lift increase and drag reduction, which may result in a higher lift-to-drag ratio. By such shape, the pressure surface extending section may bulge inwardly to form a longitudinal recess that extends in longitudinal direction of the flow modifying element.

To extend the pressure surface of the blade body, the pressure surface extending section may be configured to form a continuous surface with the pressure surface of the blade body. For example, a continuous surface may imply that there is no step, e.g., that the pressure surface does not first transition into a trailing edge of the blade body to which the flow modifying element is mounted, but the pressure surface directly transitions into the pressure surface extending section. In the aerodynamic profile, there may accordingly be no step or jump (taking the chord line of the blade body as a reference axis). The pressure surface extending section may be formed to smoothly transition from the pressure surface, or to form an edge with the pressure surface of the blade body.

A reference system may be defined according to which the leading edge is located in front of the trailing edge and the suction side is arranged above the pressure side. References to above and below as well as forward and reward or behind refer to this reference system.

For example, the pressure side profile section may have a first part that extends rearwardly and upwardly (i.e., towards the trailing end and the suction side), may reach an apex and may have a second part that extends rearwardly and downwardly (i.e., towards the trailing end and the pressure side). The profile section may thus have an (symmetric or asymmetric) arc shape, the open side of which faces a chord line of the blade body.

The recessed portion may be located above an extrapolation of the pressure surface of the blade body towards the trailing end. For the sake of simplicity, extrapolation of the pressure surface herein refers to an extrapolation of the curve section of the profile of the blade body that corresponds to the pressure surface of the blade body. It is noted that extrapolation refers to an estimated extension of the respective surface or curve section, i.e. to an imaginary surface or curve, which is used herein for geometrically describing the relative arrangement of the components. Such extrapolation may use a straight line that is tangential to the point where the curve section corresponding to the pressure surface ends, or may use a curved line having a curvature that corresponds to the curvature of the profile section/surface to be extrapolated. It is however noted that the shape of the pressure surface towards the trailing end is generally rather straight in the profile.

In an example, the pressure side profile section may be shaped to have an apex in the direction of the suction side perpendicular to a chord line of the blade body, wherein the apex is located in the direction of the suction side above an extrapolation of the pressure surface of the blade body in the profile. Preferably, the apex is located above a center line between an extrapolation of the suction side and an extrapolation of the pressure side of the blade body in the profile. Such center line may also be termed "middle line" and generally is the geometric middle between the two reference lines. It may have the same distance to both lines and may for example cut an intersection angle between the two reference lines in half. By providing a recess of such depth, the lift coefficient may be increased further.

In the profile, the largest area of the recessed portion may in particular lie below the center line.

A first part of the pressure side profile section may be configured to form in the profile an obtuse angle with the pressure surface of the blade body or with an extrapolation thereof. The first part may extend towards the suction side and towards the trailing end. The angle may for example be measured between a tangent on the pressure side profile section and a tangent on the pressure surface at the point where the pressure surface ends (towards the trailing edge). The obtuse angle may be in a range between 95° to 160°.

In a particular example, the pressure surface extending section may be configured to meet the pressure surface of the blade body at the obtuse angle. The element may have a respective edge at the meeting point of the two respective surfaces. From the meeting point, the pressure surface extending section may extend upwardly and towards the trailing end. Alternatively, the point where the two surfaces meet may be rounded, and the angle may be measured between two tangents on the surfaces in the profile just before such rounding. By providing such obtuse angle at the meeting point, drag may be reduced, in particular compared to a conventional flat back trailing edge.

The pressure side profile section, in particular the shape of the concave curve, may have a first tangent in a first point arranged towards the blade body and a second tangent in a second point arranged towards the trailing end. The first and the second tangents may form an angle that is smaller than 140°, preferably smaller than 120°, more preferably smaller than 100°. The profile section may in particular be provided with a respective length and/or curvature to achieve such angle. The concave curve may for example be implemented with a quarter circle and straight legs at each end of the quarter circle, which would correspond to an angle of 90° between the first and second tangents. This is however only an example, and the concave curve may be formed by any suitable combination of straight and/or curved sections. In particular, the pressure side of the flow modifying element may have a respective arc shape or claw shape.

The radius of curvature of the concave curve section may be smaller than a thickness of the trailing edge of the blade body, preferably smaller than half of the thickness of the trailing edge of the blade body. The thickness of the trailing edge of the blade body may for example be measured perpendicular to a chord line of the blade body from a point where the pressure surface of the blade body ends (i.e. transitions to the pressure surface extending section) to the suction surface or an extrapolation of the suction surface of the blade body. By such angle between the tangents or curvature of the recessed portion, a compact element may be achieved and drag may further be reduced.

The pressure surface extending section may be shaped such that the pressure surface extending section and the trailing end meet in a point that is located with respect to a chord line of the blade body towards the suction side (above the chord line) or towards the pressure side (below the chord line). This point may be the lowest point of the trailing edge and may be adjusted in accordance with the desired aerodynamic properties of the element. Preferably, this point is located below the above-mentioned center line. In an exemplary implementation, the point may lie on an extrapolation of the pressure surface of the blade body.

Preferably, the trailing end of the flow modifying element may be configured to be arranged above an extrapolation of the pressure surface of the blade body or below an extrapolation of the pressure surface of the blade body. It may be arranged fully above or fully below such extrapolation, or at least a center of the trailing edge may be arranged above, below or on such extrapolation.

The shape of the concave curve of the pressure side profile section may in some examples extend from the pressure surface of the blade body to the trailing end of the flow modifying element, preferably without an inflection point. A simple and aerodynamically efficient shape may thus be obtained.

In an example, the flow modifying element may comprise a suction surface extending section configured to extend the suction surface of the blade body towards the trailing end. Preferably, the suction surface extending section is configured to form a continuous surface with the suction surface of the blade body. Further drag reduction and lift enhancement may thereby be obtained.

The suction surface extending section may be a surface on a suction side of the element, and the pressure surface extending section may be a surface on a pressure side of the element. The trailing end may be arranged between the suction surface extending section and the pressure surface extending section and may connect the suction surface extending section and the pressure surface extending section. The element may have only a single trailing end in the profile.

The suction surface extending section may be shaped to provide in the aerodynamic profile a curved end section that extends towards the trailing end and that bends away from the suction side towards the pressure side, i.e. bends downwardly. Such shape of the suction side of the element may further reduce drag.

In an example, the suction surface extending section may be shaped to provide in the aerodynamic profile an intermediate suction profile section that has a shape of a concave curve and that forms a further recessed portion that is recessed from the suction side towards the pressure side of the flow modifying element. The suction surface extending section of the element may thus have a surface shape that bulges inwardly towards the suction side, and may thus form a recess that extends in longitudinal direction. This further recessed portion and the recessed portion formed in the pressure surface extending section of the element may be spaced apart in a direction of the chord of the blade body. Considering a line parallel to the chord line of the blade body, an apex of the recessed portion may lie above such line and an apex of the further recessed portion may lie below this line (in other words, projections of the recessed portion and the further recessed portion in chord direction overlap). The recessed portion may be arranged closer to the trailing end then the further recessed portion.

By such two recessed portions, the rear part of the flow modifying element may have a claw shape that includes the trailing end.

In some implementations, the pressure surface extending section and the suction surface extending section may have a (substantially) constant distance from each other over at least 40% of their extension towards the trailing end (the claw shape may thus have a constant thickness). The distance may be measured perpendicular to the respective surface section. Such constant thickness may be provided over more than 50%, 60% or even 70% of the extension in chord direction of the rear part of the element. The shape of the suction surface extending section may in particular follow the shape of the pressure surface extending section while keeping the constant distance, e.g. over at least 40%, 50% or 60% of the extension of the element in chord direction.

The flow modifying element may have over at least 25%, 40% or 50% of its extension in chord direction adjacent to the trailing edge a thickness of at least 5% of a thickness of the trailing end of the blade body preferably a thickness between 5% and 100% of the thickness of the trailing edge of the blade body. The claw shape formed by the element may thus be moderately thick, or may have a thickness that even corresponds to the thickness of the trailing edge of the blade body.

The intermediate suction profile section may include a first part that extends substantially perpendicular to a chord line of the blade body towards the pressure side and that continues into a curved part that bends towards the trailing end and has a tangent that is parallel to the chord line (e.g., the tangent at the apex of the further recessed portion). A respective edge that extends in a longitudinal direction may thus be formed in the element by the substantially perpendicularly extending first part.

The suction surface extending section may further form in the profile a transition suction profile section that is configured to extend from the suction surface of the blade body in a direction towards the trailing end. Such transition section may comprise a substantially straight part that provides an edge towards the intermediate section, or may comprise a curved part that provides a smooth transition to the intermediate section and includes an inflection point.

In another exemplary configuration, the suction surface extending section may be shaped to provide in the aerodynamic profile a suction side profile curve that includes a straight or substantially straight section, which may be configured to be tangential to the suction surface of the blade body, or to form a positive or a negative angle with an extrapolation of the suction surface of the blade body. By such extension with the straight section, the aerodynamic properties may be adjusted to either provide more lift increase (negative angle) or to provide more drag reduction (positive angle) or a combination of both (tangential). If in the profile, the leading edge is on the left-hand side, then the negative angle may correspond to a counter-clockwise rotation and the positive angle to a clockwise rotation. The straight section may extend over most of the length of the suction side profile curve that corresponds to the suction surface extending section, for example over more than 30% or more than 50% of its length.

The straight or substantially straight section may be followed in rearward direction by the end section, or may end at the trailing end of the element and may thereby form an edge or rounded transition to the trailing end.

The flow modifying element may be formed as a single integral part, or may be composed of two or more parts. The element may for example include a first part that forms the recessed portion and the further recessed portion, and this part may be mounted to or may be integral with the blade body. It may further include a second part that covers the further recessed portion and that may provide the (substantially) straight section of the suction surface extending section. This second part may be mounted to the first part, or both parts may be formed integrally. Such configuration may allow the providing of the first (e.g. standardized) part and the tuning of the aerodynamic properties by providing differently shaped second parts.

The trailing end of the flow modifying element may be a flat end or may be a rounded end. In some examples, the trailing end may extend perpendicular to a chord line of the blade body, or may extend perpendicular to a tangential of the pressure surface extending section at the trailing end.

The element may further comprise one or more reinforcement elements that may extend at one or more longitudinal positions of the element across the recessed portion. The mechanical stability of the element may thereby be improved, in particular when providing a relatively thin claw shape. For example, one or more reinforcement elements may be provided depending on the material from which the element is made, e.g. to provide the desired mechanical stability. One or more respective reinforcement elements may also be provided across the further recessed region. One or more reinforcement elements may thus be provided on the pressure side, on the suction side, or on both sides. The reinforcement element may extend in a front-to-rear direction, for example parallel to a profile plane, or it may extend parallel to a main flow direction of air at the respective longitudinal position. The reinforcement element may be plate-shaped. In some implementations, it may not extend beyond the recess. In other implementations, the reinforcement element may extend (slightly) beyond the trailing end of the element, and/or may (slightly) extend beyond the point where the pressure surface extending section meets the pressure surface of the blade body. The configuration may depend on structural and/or design requirements.

The flow modifying element may be an active element, or may be a passive element.

For example, the element may further comprise one or more actuators configured to change an extension, orientation, and/or a curvature of the flow modifying element. By for example controlling the length and/or curvature, the aerodynamic profile may be adapted to the prevailing wind speed and operating conditions, for example taking into account flow velocities and angle of attack or the like. Actuators for changing the shape of the element may be arranged in the blade body. In particular, the height (direction perpendicular to chord line) or the width (direction parallel to chord line) of the rear part of the flow modifying element may be adjustable by such actuator.

The element may for example comprise at least one articulation point in the pressure side profile section. A rear part of the flow modifying element that includes the trailing edge may be pivotable above the articulation point, e.g. by operation of the actuator. The position of the trailing end may thereby be adjusted.

In another example, the pressure side profile section may include at least two articulation points that are arranged to allow an adjustment of the width of the flow modifying element in a chord direction of the blade body, and/or an adjustment of the height of at least part of the flow modifying element in a direction perpendicular to the chord direction. Two actuators may for example be provided, each controlling the pivoting about a respective articulation point.

Actuators may for example may be electrical (motor), magnetic (solenoid), chain and gear system, hydraulic, or pneumatic actuators, or other actuators known in the art may be employed.

The flow modifying element may be configured to have a shape that is matched to a thickness of a rear part of the blade body, wherein the flow modifying element may be arranged so that the thickness of the aerodynamic profile is continuous at the transition from the blade body to the flow modifying element. Such smooth transition may provide a further drag reduction. Continuous may in particular mean that there is no step.

The element may be solid, or the element may comprise voids or cavities. By such voids or cavities, the weight and the material required for manufacturing may be reduced. Such voids or cavities may for example extend in a longitudinal direction through a main body of the element, and may be closed in a lateral direction perpendicular to the longitudinal extension of the element.

The element may be made from plastic material, fiber reinforced material (for example glass fiber or carbon fiber reinforced), a composite material or any other suitable material.

The flow modifying element may be an add-on element that further comprises a mounting section configured to be mounted to a trailing edge of the blade body, or the flow modifying element and the blade body may be formed integrally to form the wind turbine blade. In the former case (add-on), the blade body may have an own trailing edge, to which the add-on element is mounted, the element then providing by means of its trailing end the trailing edge for the wind turbine blade. The trailing edge of the blade body may thus be covered and may essentially be substituted by the trailing edge provided by the element. In the latter case (integrated element), the flow modifying element may be formed when manufacturing the wind turbine blade so that the trailing end of the element is the same as the trailing edge of the wind turbine blade. The blade body may in this case not have a trailing edge in the respective longitudinal section, but the trailing edge of the blade body may be estimated to be at the location at which the airfoil, from which the blade body is formed, would have its trailing edge.

In an example, the mounting section of the flow modifying element may have a rounded shape configured to be mounted to a rounded trailing edge of the blade body. The mounting section may in particular be configured to adapt to the surface shape of the trailing edge of the blade body. Thereby, a larger attachment area may be achieved, which may result in a more secure mounting of the element to the blade body. The trailing edge of the blade body may for example be formed by the suction surface of the blade body curving towards the pressure surface of the blade body to meet the pressure surface at an angle larger than 45°, preferably larger than 70° or 80° (for example about 90°). The radius of curvature of the trailing edge of the blade body may for example be equal to or smaller than a thickness of the blade body at its trailing edge.

The add-on element may be configured to be mounted to the blade body by means of an adhesive, a touch fastener (e.g., Velcro^{®}), a mechanical fastener, or any other mounting element.

In the aerodynamic profile, the trailing edge of the blade body may be covered by at least 50%, preferably by at least 70%, e.g. fully, in the thickness direction by the flow modifying element. A strong mechanical connection may thereby be achieved between the flow modifying element and the trailing edge of the blade body.

A width of the flow modifying element may be defined in a direction of a chord of the blade body from a position at which the pressure surface extending section abuts the pressure surface of the blade body to the trailing end of the element.

The element may be an add-on element configured to be mounted to the blade body, and the width may be selected from the range of 3%c to 50%c, preferably 5%c to 50%c, more preferably 10%c to 40%c, wherein c is the chord length of the blade body at the longitudinal position of the flow modifying element, or is the average chord length taken as an average of the chord lengths of the blade body over a longitudinal range of the blade over which the flow modifying element (e.g. the respective segment) extends. The chord length may in this case not include the element.

When the flow modifying element is integral with the blade body, the width of the element may be selected from the range of 3%c to 35%c, preferably 5%c to 35%c, more preferably 9%c to 30%c, wherein c is the chord length of the wind turbine blade at the longitudinal position of the element or the average chord length taken as an average of the chord length of the blade over a longitudinal range of the blade body over which the element (e.g. the respective segment) extends. As in this case, the element forms an integral part of the blade, the chord length may include the element.

The flow modifying element may be a continuous element that extends continuously over a predetermined longitudinal section of the blade, or the element may be provided as a longitudinal segment that has a predefined length in longitudinal direction of the blade. Plural such segments may be arranged along the longitudinal direction of the blade adjacent to each other to cover a predetermined longitudinal section of the blade.

The flow modifying element may have the same width over its longitudinal extension, or may have a variable width over its longitudinal extension. Longitudinal extension may refer to extension in the longitudinal direction of the blade.

In an example, the wind turbine blade may extend in a longitudinal direction from a position at 0%L, at which the wind turbine blade is mountable to a hub of a wind turbine rotor, to a blade tip at a position of 100%L, wherein L corresponds to the blade length. The flow modifying element may be configured to be provided on the blade body within a longitudinal region between 0%L and 60%L, preferably between 5% L and 50% L, more preferably between 10%L and 40%L, or in any sub-combination of these region borders, for example between 10%L and 50%L. The element may thus be provided in the root region of the blade, in which profiles generally have a high relative thickness and may have a blunt trailing edge. The root region of the blade that includes one or more respective elements may thus be provided with an improved aerodynamic performance and may in particular make a higher contribution to the annual energy production (AEP). The flow modifying element may in particular increase lift and/or reduce drag in the root region of the blade, thereby increasing AEP.

For example, the element may be configured to be provided on the blade body within a longitudinal region in which the blade has a relative thickness (t/c) in the range of 30% to 100%, preferably 35% to 95%. Thickness t may be defined as the maximum dimension of the profile perpendicular to the chord line and relative thickness as t/c. Such relatively thick profiles may particularly benefit from the flow modifying element.

The flow modifying element may not span the whole respective region, but may be provided only over a portion of the region, for example a number of longitudinal segments of the flow modifying element may be provided within the respective region.

The flow modifying element may for example be configured to be provided on the blade body over the longitudinal section having a longitudinal extension of at least 10%L, preferably at least 15%L, more preferably at least 20%L, wherein L corresponds to the blade length. The flow modifying element may extend continuously over this longitudinal section or segments of the element may be arranged adjacent to each other to cover this section.

According to a further aspect of the present invention, a wind turbine blade comprising a blade body having a leading edge, a suction surface, and a pressure surface is provided. The wind turbine blade further comprises a flow modifying element that has any of the configurations described herein. The flow modifying element is mounted to the blade body, or the flow modifying element and the blade body are formed integrally to form the wind turbine blade. The flow modifying element is configured to provide a trailing edge for at least a longitudinal section of the wind turbine blade. By means of such wind turbine blade, advantages similar to the ones outlined further above may be achieved.

According to a further aspect, a wind turbine comprising a respective wind turbine blade is provided.

According to a further aspect, a method of operating a wind turbine is provided, wherein the wind turbine comprises a wind turbine blade having any of the configurations described herein. By such method, the annual energy production of the wind turbine may be increased.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine including a wind turbine rotor with wind turbine blades according to an embodiment.
Fig. 2 is a schematic drawing showing a wind turbine blade, wherein a longitudinal section over which a flow modifying element extends is indicated according to an embodiment.
Fig. 3 is a schematic drawing showing a profile of a blade body of a wind turbine blade without flow modifying element.
Fig. 4 is a schematic drawing showing a profile of a wind turbine blade including a flow modifying element according to an embodiment.
Fig. 5 is a schematic drawing showing a modification of the flow modifying element of figure 4.
Figs. 6 and 7 are schematic drawings showing different geometries for the flow modifying element of figures 4 and 5.
Fig. 8 is a schematic drawing showing a perspective view of a flow modifying element according to an embodiment.
Figs. 9-11 are schematic drawings each showing a flow modifying element according to a further embodiment.
Fig. 12 is a schematic drawing showing a perspective view of a flow modifying element according to a further embodiment.
Fig. 13 is a schematic drawing showing a profile of a flow modifying element corresponding to the element of figure 12.
Fig. 14 is a schematic drawing showing a profile of an active flow modifying element according to an embodiment.
Fig. 15 is a schematic drawing showing a profile of an active flow modifying element according to a further embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

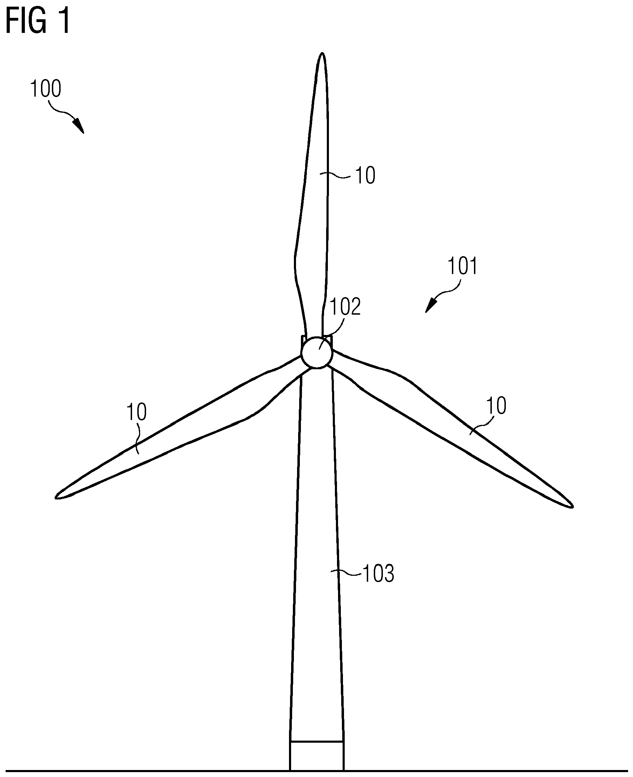

Fig. 1 schematically illustrates a wind turbine 100 according to an example. The wind turbine 100 includes a wind turbine rotor 101 and a wind turbine tower 103. The rotor 101 has a hub 102 to which three rotor blades 10 are mounted, which may be configured in accordance with any of the examples and embodiments described herein.

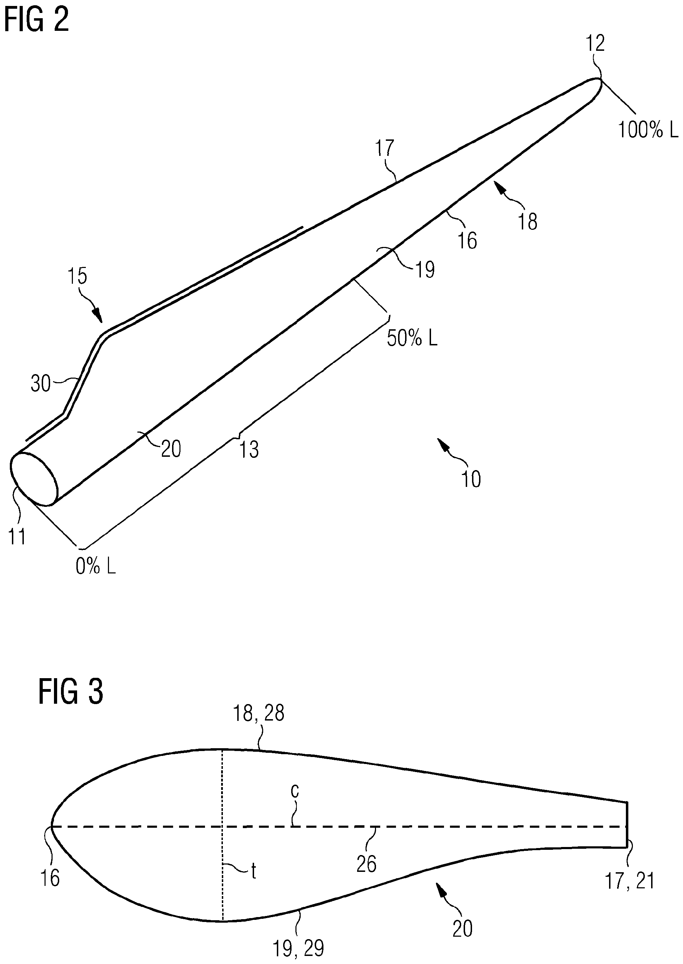

Fig. 2 schematically illustrates a wind turbine blade 10 according to an embodiment. The blade has a length L, which may for example be more than 30, 50, or even more than 60 m. The blade 10 has a root end 11 at which the blade 10 is mountable to the hub 102, and has a tip end 12 at which the tip of the rotor blade is located. The root end is located at 0%L and the tip end at 100%L. A root region 30 may span from 0%L to about 50%L, although such root region may also be defined differently.

Blade 10 may include a blade body 20 and a flow modifying element 30. Blade body 20 and flow modifying element 30 may be formed integrally to form the wind turbine blade 10, or flow modifying element 30 may be an add-on element that is mounted to the blade body 20. The flow modifying element may be provided within the longitudinal region between 0%L and 60%L, preferably between 5%L and 50%L, for example between 10%L and 50%L or 10%L and 40%L. Within the respective longitudinal region, several longitudinal segments of element 30, each having a predefined length, may be provided, and they may be provided continuously or may be spaced apart. Within the longitudinal region, the element 30 may also be provided continuously over a certain longitudinal section 15. The longitudinal section 15 over which element 30 is provided may for example have a size of at least 10%L, at least 15%L or at least 20%L. The element may for example extend over the longitudinal section 15 having a size between 10%L and 40%L. The element may continuously cover this section, or longitudinal segments of the element may be arranged adjacent to each other over this section.

Blade 10 has a leading edge 16 and a trailing edge 17, wherein in longitudinal regions of the blade not provided with element 30, a trailing edge 21 of the blade body 20 may form the trailing edge 17 of the blade, whereas in longitudinal regions covered by element 30, a trailing end 37 of the element 30 may form the trailing edge 17 of blade 10.

Generally, a profile is a cross-section of the blade perpendicular to the longitudinal axis of the blade. Such profile, also termed "aerodynamic profile" herein, generally has a thinner airfoil shape in the outboard region of the blade, a thicker airfoil shape in the root region of the blade, and may even approximate a circular shape at the root end 11. Fig. 3 illustrates an exemplary profile of the blade body 20 which may be used in the root region 13. The chord line 26 may be defined as the line intersecting the two profile points with the largest mutual distance. Where the profile has a flat trailing edge 21, as shown in the example of Fig. 3, the chord line 26 may cut the trailing edge in the middle thereof. The chord length c is the distance between these two profile points. The thickness t of the profile may be defined as the maximum thickness perpendicular to the chord direction. The relative thickness of a profile is the ratio of thickness to chord length, t/c. Chord length and thickness may be measured without add-ons or extensions.

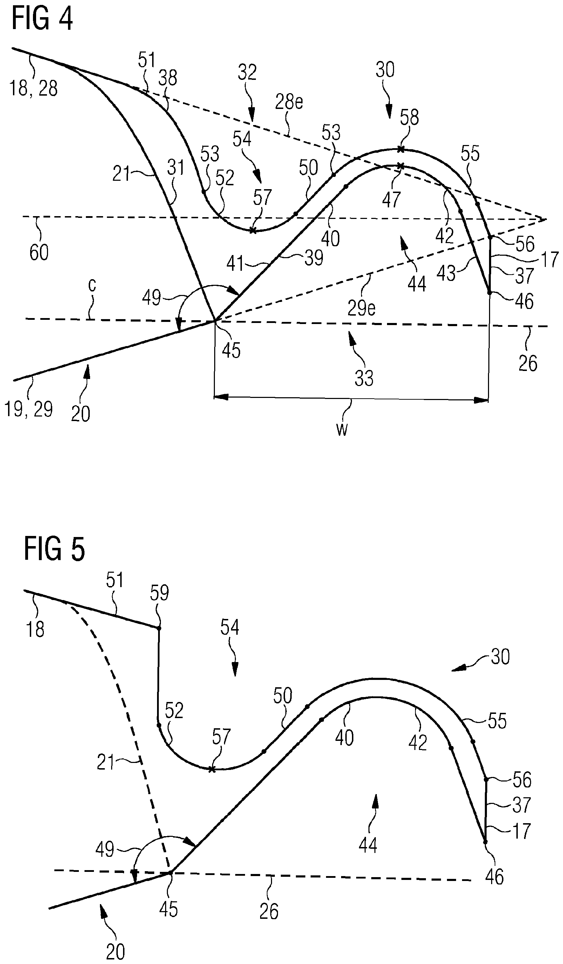

The profile of blade body 20 includes the leading edge 16 and a trailing edge 21, which correspond to leading edge 16 and trailing edge 17 of the blade without add-ons. The blade body 20 further includes the suction surface 18 and the pressure surface 19 that correspond to a respective suction side profile section 28 and pressure side profile section 29 in the profile shown in Fig. 3. These profile curves extend from the leading edge 16 to the trailing edge 21 of the blade body 20. As the profile of body 20 has a flat trailing edge 21, it may be termed a flatback airfoil. The blunt trailing edge of such airfoil of the root region may also be rounded. In particular, as shown in Fig. 4, the suction side trailing edge may be rounded; for example, the profile curve of the trailing edge may bend away from the suction side towards the pressure side profile section 29 and may meet it at an approximately right angle. Such shape of the trailing edge 21 may have advantages from a manufacturing viewpoint, but may be associated with reduced aerodynamic performance.

Fig. 4 schematically illustrates a flow modifying element 30 mounted to a trailing edge 21 of the blade body 20. Element 30 includes a mounting surface 31 that may be adhered or otherwise attached to trailing edge 21. Element 30 includes a suction surface extending section 38 that extends the suction surface 18 of blade body 20 (shown as suction side profile section 28). Element 30 further includes the pressure surface extending section 39 that extends the pressure surface 19 of blade body 20 (shown as pressure side profile section 29 in the profile of Fig. 4). As can be seen, the extending sections 38, 39 are continuous with the suction and pressure surfaces 18, 19, respectively, i.e., there is no intermediate step or part of the trailing edge 21. In the example of Fig. 4, the profile of element 30 includes a pressure side profile section 40 that is shaped as a concave curve that forms a recessed portion 44. In the profile, a main area of the recess 44 lies above an extrapolation of chord line 26 and further lies above an extrapolation 29e of the pressure surface section 29. The recess 44 extends from a pressure side 33 of the element 30 towards the suction side 32. Suction side 32 may be considered to lie above pressure side 33, and leading edge 16 may be considered to be in front of trailing edge 21. In this reference frame, the profile section 40 includes a first section 41, which extends from a transition point 45, at which the pressure surface 19 ends, rearwardly and upwardly. An obtuse angle 49 is formed between pressure surface 29 and the first section 41, which may for example be larger than 95° and smaller than 170°, preferably smaller than 140°. At transition point 45, an edge is formed. In other implementations, the first section 41 may not be straight, but may be curved; it may for example be S-shaped and include an inflection point to provide a smooth transition.

Curved section 42 includes an apex 47 (largest distance to chord line 26) and further bends downwardly again towards the pressure side 33. In the present example, curved section 42 is circular (e.g., quarter circle), but it may have any other concavely curved shape and may be composed of several differently curved and/or straight sections. Pressure profile section 40 further includes a second section 43 that in the present example is straight but may also be curved. Second section 43 meets the trailing end 37 at a meeting point 46. To adjust the lift and the drag in dependence on the airfoil shape of blade body 20 and the longitudinal mounting position, meeting point 46 and/or trailing end 37 may be arranged above, on or below the extrapolation 29e of the pressure surface 19. Meeting point 46 and/or trailing end 37 may be arranged above, on, or below the chord line 26. The concave shape of the pressure side profile section 40 may extend from the transition point 45 to the meeting point 46, or may span only a part thereof (for example if inflection points are present in sections 41 or 43).

Apex 47 of the recessed portion 44 preferably lies above the chord line 26 or lies above the extrapolation 29e of the pressure surface 19. Reference numeral 60 designates a center line (or middle line) that is arranged equidistantly between the extrapolations 28e and 29e of the suction surface and pressure surface 18, 19, respectively, as shown in Fig. 4. Apex 47 may lie above the center line 60.

In the present example, the trailing end 37 is a flat end that is substantially perpendicular to the chord line c. In other implementations, trailing end 37 may be perpendicular to the end section 43 of the pressure surface extending section 39, in particular to a tangent thereof at the meeting point 46. The edges of trailing end 37 may be rounded, or the whole trailing end 37 may be rounded, it may for example correspond to a half circle or corresponding curve in the profile.

A width w of the element 30 is measured from the transition point 45 where the pressure surface extending section 39 meets the pressure surface 19 to the trailing end 37 in a direction parallel to chord line c. Width w may be adjusted in accordance with the required aerodynamic properties of element 30. A length w may be between 5%c and 60%c, wherein c designates the chord length of the blade body 20. Preferably, the width w may be between 10%c and 50%c, or 15%c to 40%c. The shape of the pressure surface extending section 39 may provide a lift increase at the lower side of the profile while the impact regarding an increase in drag is relatively low. The above discussed properties and configurations may apply to any of the embodiments and examples of the element 30 discussed herein.

Fig. 4 illustrates a particular configuration of the shape of the suction surface extending section 38. It includes a suction side profile section 50 that is shaped to provide a further recessed portion 54 which extends towards the pressure side 33. With respect to the chord line c, the further recess 54 has an apex 57, which may be located below the extrapolation 28e of the suction surface 18, and may in particular be located below the center line 60. The profile section 40 includes a transition suction profile section 51 that provides a continuous surface with the suction surface 18 and that in the present example is curved (convexly) up to an inflection point 53. It further includes an intermediate profile section 52 that is curved and that may further include a straight section up to further inflection point 53. It may further include a curved end section 55 that curves downwardly towards the trailing end 37, with which it forms a meeting point 56. In the present example, the curved end section 55 forms an apex 58 (in suction side direction with respect to chord line c), which lies opposite to apex 47.

In the rear part, over most of the width w (>50%), the shape of the suction side profile section 50 follows the shape of the pressure side profile section 40, thereby forming a claw shape of the rear part of element 30. Apex 58 may be arranged above or below the extrapolation 28e of the suction surface 18. Suction side profile section 50 may in particular have a S-shape with an inflection point 53 between the curved sections 52 and 55, as illustrated in Fig. 4. Such shape may result in a higher lift and lower drag. By such shape, flow separation at the suction side may be reduced or prevented and the lift increase may be higher at high angles of attack compared to a conventional chord extension, in particular due to the curvature on the pressure side.

Curved section 55 may also be tangential to the extrapolation 28e of suction surface 18.

Element 30 may cover the whole trailing edge 21 of the blade body 20. In particular for a rounded trailing edge 21, a larger attachment area may be achieved, thus ensuring a firm and safe attachment.

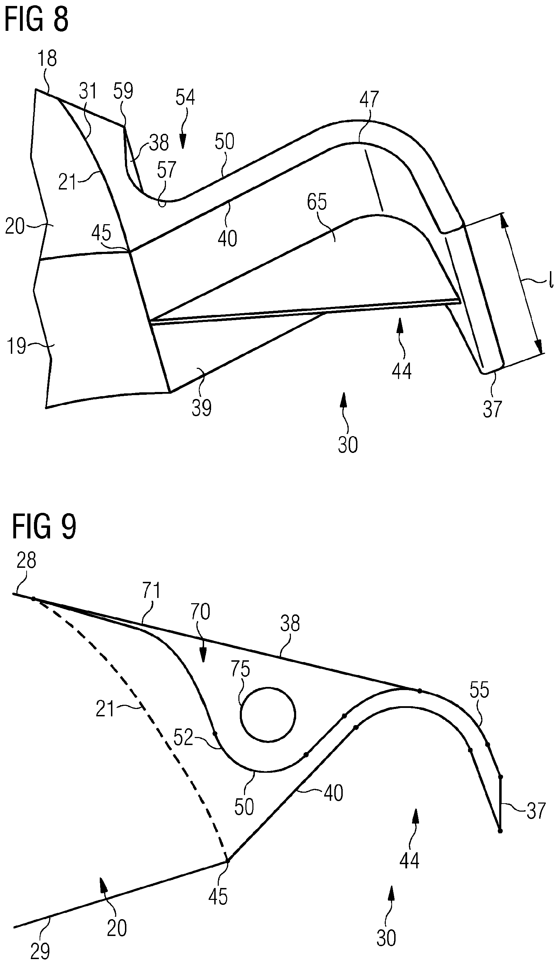

Fig. 5 illustrates a further exemplary implementation of element 30. Element 30 may be formed integrally with the blade body 20, for example in a common manufacturing process. The position at which the trailing edge 21 would be located for a conventional blade body is thus only schematically illustrated by a dashed line. Both possibilities (add-on element or integrated into blade body) can be provided for each of the embodiments and examples disclosed herein. In the example of Fig. 5, the transition suction profile section 51 is furthermore straight and extends tangentially to the suction surface 18. It meets the curved section 52 at a meeting point 59 that forms a longitudinally extending edge of element 30 (please see also Fig. 8). The intermediate profile section 52 may thus also include a straight section that extends downwardly towards the chord line c from point 59.

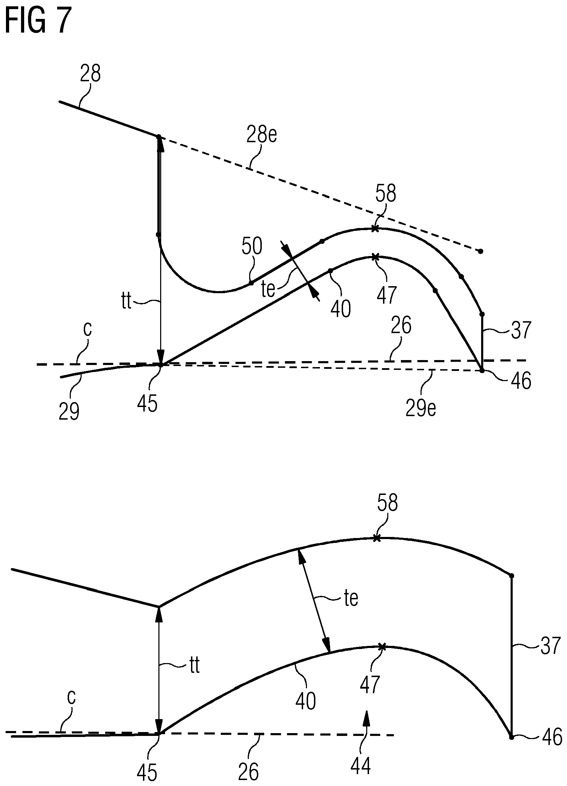

It should be clear that the curved sections may be composed of a mixture of straight and/or curved segments having different curvature. In the examples of Figs. 4 and 5, the radius of curvature of curved section 42 is larger than the radius of curvature of curved section 52. The radius of curvature of section 42 is smaller than a thickness tt of the trailing end of blade body 20, which may be measured as illustrated in Fig. 7; it may be smaller than half the thickness tt. It should be clear that these are only exemplary configurations and that the geometry may be adapted in accordance with the desired aerodynamic properties.

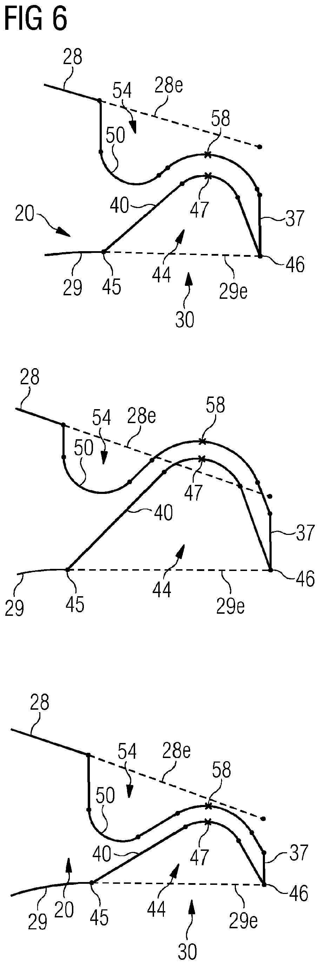

Fig. 6 provides different examples of the height of the claw-shaped portion of element 30. In the upper example, both apex 47 and apex 58 are arranged below the extrapolation 28e of the suction surface profile section 28. In the example shown in the middle, the apex 47 of recessed portion 44 and the apex 58 of the suction surface extending section are arranged above the extrapolation 28e of the suction surface profile section 28. In the lower example, the suction side profile section 50 is substantially tangential to the extrapolation 28e of the suction surface extending section 28. In the example of Fig. 6, the meeting point 46 of the trailing end 37 lies on the extrapolation 29e of the pressure side profile section 29. Extrapolation 29e may for example be tangential to profile section 29 in the transition point 45. It should be clear that point 46 may also lie above or below that extrapolated line.

Fig. 7 illustrates a thickness te of the rear part of element 30 that may be defined perpendicularly to the pressure side profile section 40 and suction side profile section 50. A thickness tt of the trailing edge 21 of the blade body 20 may be defined perpendicular to the chord line 26 from the transition point 45 to the intersection with the suction surface profile section 28 or its extrapolation 28e. The thickness TE may for example be between 5% to 100% of the trailing edge thickness tt. On the upper example of Fig. 7, the thickness of the claw is about te=11% tt; on the lower example it is about te=90% tt. Any other values in-between are certainly conceivable. The thickness may be substantially constant over more than the rear 50% of the extension of element 30 over the width w.

Fig. 8 shows a perspective view of element 30 mounted to trailing edge 21 of blade body 20. Trailing end 37 is rounded, and the suction surface extending section 38 includes an edge 59 as well as a further recessed portion 54. As illustrated, a reinforcement element 65 may be provided to span across the recessed portion 44. Element 65 is configured to provide mechanical stability. It may extend in a plane parallel to the profile plane, or may extend at a desired aerodynamically beneficial angle, for example parallel to an expected flow direction of air. A similar mechanical reinforcement element may be provided on the suction side across the recessed portion 54 (not shown). Plural such elements may be distributed longitudinally along the length l of the element 30. Fig. 8 only shows a short segment. The actual length l may be significantly longer, it may for example span between 50 cm and 5 m.

Reinforcement elements may be arranged on the suction and/or the pressure side. They may be formed integrally with element 30, or may be mounted thereon.

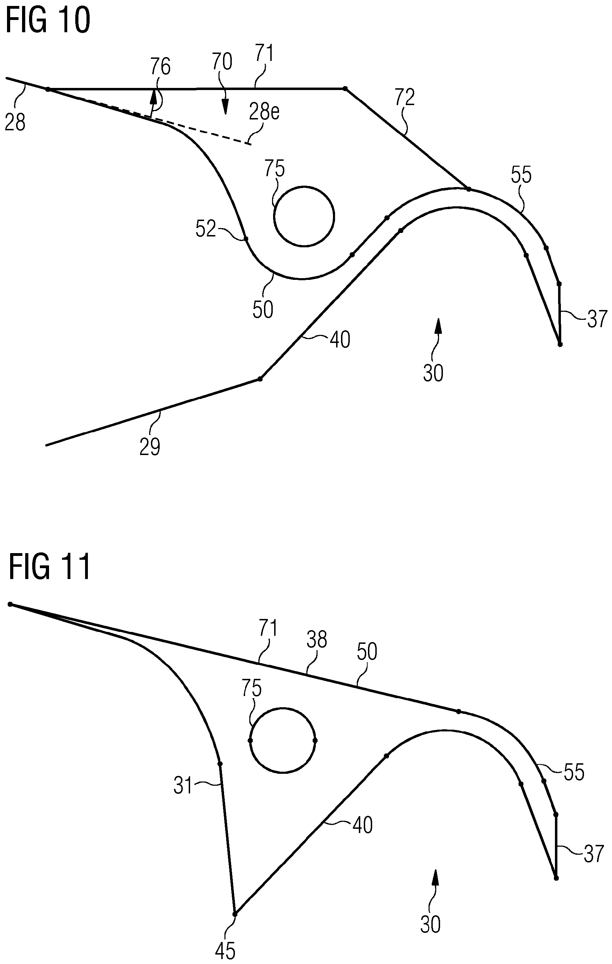

As illustrated in Fig. 9, element 30 may comprise a first part that may have any of the above-described configurations, and a second part 70. The second part 70 may be placed in the further recessed portion 54. It may provide at least a portion of the suction surface extending section 38. In the present example, it includes a straight section 71 that is substantially tangential to the suction surface profile section 28 of blade body 20, but it may also be angled with a positive or a negative angle thereto, as illustrated in Fig. 10. In the example of Fig. 9, the suction surface extending section 38 is formed by the straight section 71 and the curved end section 55, which meet tangentially. By such configuration, suction side flow separation may further be reduced and additional structural support may be provided. The curved section 55 is substantially tangential to an extrapolation of the suction side profile section 28, and the straight section 71 essentially bridges the gap between both.

In Fig. 10, the straight section 71 forms a negative angle 76 with the extrapolation 28e of section 28, wherein the angle is an acute angle in counter-clockwise direction in the profile having the leading edge on the left-hand side and the suction surface on an upper side. The additional part 70 further includes a second straight section 72 that connects the first straight section 71 to the curved end section 55. Other configurations are certainly conceivable, such as the sections 71, 72, forming a smooth curved transition towards curved section 55. The part 70, and/or other parts of the element 30, may further include a cavity 75 that allows a reduction in weight and conservation of material for manufacturing the element 30. Cavity 75 may have any desired shape that ensures structural stability of element 30.

Fig. 11 illustrates a further exemplary implementation of element 30, wherein the further additional part 70 is formed integrally with the remaining part of the element 30. The element 30 is illustrated as an add-on element in Fig. 11, but may also be integrated with the blade body 20, as explained above. The suction surface extending section 38 has a shape that is similar to the one shown in Fig. 9, but it should be clear that any of the shapes described herein and any variations thereof may be used.

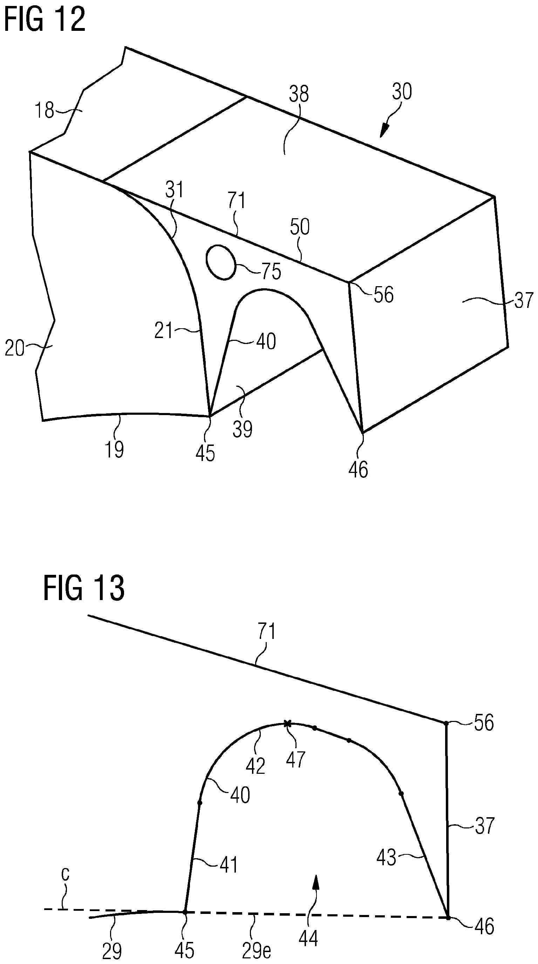

Fig. 12 illustrates a further exemplary implementation, in which no curved end section 55 is provided, but in which the straight section 71 meets the trailing end 37 directly at the meeting point 56. In the example of Fig. 12, element 30 is formed as a single integral element mountable to blade body 20, but it may also be formed of multiple components, as explained with respect to Figs. 9 and 10. Likewise, straight section 71 may not be tangential to the suction surface 18, but may form a positive or negative angle therewith. A respective second straight or curved section 72 may accordingly be provided and may meet the trailing end 37 at the meeting point 56.

In the example of Fig. 12, the pressure side profile section 40 has a substantially parabolic shape, and the point 46 is pulled down to the extrapolation of the pressure surface 19. Any of the other configurations of the pressure surface extending section 39 described herein may be employed as well.

Fig. 13 shows an example in which the pressure side profile section 40 is composed of a number of curved and straight segments. At the beginning and end of section 40, two straight sections 41, 43 are provided. The curved section 42 is composed of a first curved section, a straight section, and a second curved section, which together approximate concave curve. Such shape may be employed with any of the embodiments and examples described herein, and other shapes are conceivable as well.

Element 30 is preferably a rigid element. In the examples of Figs. 4 to 13, element 30 has a predefined shape and is a passive element. In some examples, element 30 may be an active element. A respective actuator may be provided that changes the shape of element 30, for example by changing one or a combination of element width (parallel to chord direction), element height (perpendicular to chord direction), the curvature of the element or the like. The geometry of element 30 may actively be adapted to prevailing wind speed and operating conditions. Respective actuators may be mounted on element 30 and/or in blade body 20.

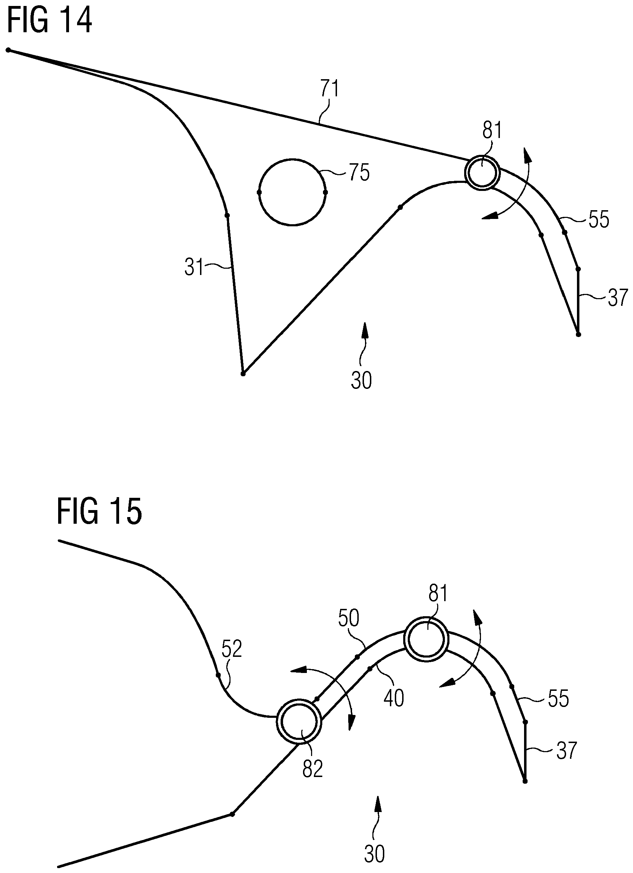

In the example of Fig. 14, a articulation point 81 may be provided at the curved end section 55, for example at a position adjacent to the apex 47. An end section including the trailing end 37 may be pivotable about the articulation point 81. At one or more positions along the longitudinal extension of element 30, a hydraulically or pneumatically actuated piston, a chain and gear system in combination with an electric or hydraulic motor or the like may be provided to controllable pivot the end portion of element 30 about the articulation point 81. The shape of the element 30 may thus be adjusted for additional lift increase, drag reduction and/or an increase of the lift-to-drag ratio.

A further example is illustrated in Fig. 15, in which a second articulation point 82 is provided, about which a central portion of element 30 is pivotable. A respective actator may again provide controllability of the pivot angle about the point 82. Width w of element 30 may thus be shortened or lengthened by pivoting about the points 81, 82. For example, the achievable minimum length may lie between 5%c and 20%c, and the achievable maximum length may lie between 30%c to 60%c. The height of the rear portion of element 30 changes correspondingly when extending element 30. An electrical motor and respective chains or belts may for example be provided inside the blade body 20 to pivot the portions of the element 30 about the one or more articulation points. By adjusting the position of the two movable segments illustrated in Fig. 15 and thus the element width, aerodynamic properties may be improved in dependence on the operational point, and energy production may be optimized. Depending on the situation, a larger width or a higher curvature of element 30 may result in an optimum lift-to-drag ratio.

Both in its active and its passive configuration, the flow modifying element 30 may thus provide significant advantages compared to conventional geometries of blade trailing edges.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A flow modifying element for a wind turbine blade, wherein the wind turbine blade (10) comprises a blade body (20) having a leading edge (16), a suction surface (18), and a pressure surface (19), wherein the flow modifying element (30) is configured to provide a trailing edge (17) for at least a longitudinal section (15) of the wind turbine blade (10), wherein the flow modifying element (30) and the blade body (20) form an aerodynamic profile, wherein the flow modifying element (30) comprises:
- a suction side (32);
- a pressure side (33);
- a trailing end (37) that provides the trailing edge (17) of the aerodynamic profile; and
- a pressure surface extending section (39) on the pressure side (33) and configured to extend the pressure surface (19) of the blade body (20) towards the trailing end (37),
wherein the pressure surface extending section (39) is shaped to provide in the aerodynamic profile a pressure side profile section (40) that has a shape of a concave curve and that forms a recessed portion (44) that is recessed from the pressure side (33) towards the suction side (32) of the flow modifying element (30).

2. The flow modifying element according to claim 1, wherein the pressure side profile section (40) is shaped to have an apex (47) in the direction of the suction side (32) perpendicular to a chord line (c) of the blade body (20), wherein the apex (47) is located in the direction of the suction side above an extrapolation (29e) of the pressure surface of the blade body in the profile, and preferably above a center line (60) between an extrapolation (28e) of the suction surface and an extrapolation (29e) of the pressure surface of the blade body (20) in the profile.

3. The flow modifying element according to claim 1 or 2, wherein the pressure surface extending section (39) is configured to meet the pressure surface (19) of the blade body (20) at an obtuse angle (49), the pressure surface extending section (39) being configured to extend from the pressure surface (19) towards the suction side (32).

4. The flow modifying element according to any of the preceding claims, wherein the pressure side profile section (40) that has the shape of the concave curve has a first tangent in a first point located towards the blade body (20) and has a second tangent at a second point located towards the trailing end (37), wherein the first and second tangents form an angle that is smaller than 140 degrees, preferably smaller than 120 degrees, more preferably smaller than 100 degrees.

5. The flow modifying element according to any of the preceding claims, wherein the shape of the concave curve of the pressure side profile section (40) is configured to extend from the pressure surface (19) of the blade body to the trailing end (37), preferably without an inflection point.

6. The flow modifying element according to any of the preceding claims, wherein the flow modifying element (30) further comprises a suction surface extending section (38) configured to extend the suction surface (18) of the blade body (20) towards the trailing end (37), wherein the suction surface extending section (38) is preferably configured to form a continuous surface with the suction surface (18) of the blade body (20).

7. The flow modifying element according to claim 6, wherein the suction surface extending section (38) is shaped to provide in the aerodynamic profile a curved end section (55) that extends towards the trailing end (37) and that bends away from the suction side (32) towards the pressure side (33) .

8. The flow modifying element according to claim 6 or 7, wherein the suction surface extending section (38) is shaped to provide in the aerodynamic profile an intermediate suction profile section (52) that has a shape of a concave curve and that forms a further recessed portion (54) that is recessed from the suction side (32) towards the pressure side (33) of the flow modifying element (30).

9. The flow modifying element according to claim 6 or 7, wherein the suction surface extending section (38) is shaped to provide in the aerodynamic profile a suction side profile curve that includes a straight or substantially straight section (71) that is configured to be tangential to the suction surface (18) of the blade body (20), or to form a positive or a negative angle (76) with an extrapolation (28e) of the suction surface (18) of the blade body (20).

10. The flow modifying element according to any of the preceding claims, further comprising one or more actuators configured to change an extension, an orientation and/or a curvature of the flow modifying element (30).

11. The flow modifying element according to any of the preceding claims, wherein the flow modifying element (30) is configured to have a shape that is matched to a thickness of a rear part of the blade body (20) where the flow modifying element (30) is arranged so that the thickness of the aerodynamic profile is continuous at the transition from the blade body (20) to the flow modifying element (30).

12. The flow modifying element according to any of the preceding claims, wherein the flow modifying element (30) is an add-on element that further comprises a mounting section (31) configured to be mounted to a trailing edge (21) of the blade body (20), or wherein the flow modifying element (30) and the blade body (20) are formed integrally to form the wind turbine blade (10).

13. The flow modifying element according to claim 12, wherein the mounting section (31) has a rounded shape configured to be mounted to a rounded trailing edge (21) of the blade body.

14. The flow modifying element according to any of the preceding claims, wherein the wind turbine blade (10) extends in a longitudinal direction from a position at 0%L, at which the wind turbine blade is mountable to a hub (102) of a wind turbine rotor (101), to a blade tip (12) at a position of 100%L, wherein L corresponds to a length of the blade, wherein the flow modifying element (30) is configured to be provided on the blade body (20) within a longitudinal region between 0%L and 60%L, preferably between 5%L and 50%L, more preferably between 10%L and 40%L.

15. A wind turbine blade comprising a blade body (20) having a leading edge (16), a suction surface (18), and a pressure surface (19), wherein the wind turbine blade (10) further comprises:
a flow modifying element (30) according to any of the preceding claims, wherein the flow modifying element (30) is mounted to the blade body (20) or wherein the flow modifying element (30) and the blade body (20) are formed integrally to form the wind turbine blade (10), wherein the flow modifying element (30) provides a trailing edge (17) for at least a longitudinal section (15) of the wind turbine blade (10).
